# EUROPEAN PATENT APPLICATION

(11) **EP 2 495 294 A1**
(43) Date of publication of application: **05.09.2012**
(21) Application number: 10826727.9
(22) Date of filing: 26.10.2010
(51) Int. Cl.: C09J 7/02, C09J 133/04

(54) **ADHESIVE TAPE, BINDING MATERIAL USING SAME, AND BINDING PART**

(30) Priority: 29.10.2009 JP 2009248995
(71) Applicant: Nitto Denko Corporation, Osaka 567-8680 (JP); Nitto Shinko Corporation, Sakai-shi, Fukui 910-0381 (JP)
(72) Inventor: TOSAKI, Yutaka, Ibaraki-shi Osaka 567-8680 (JP); TAKAYAMA, Masamitsu, Sakai-shi Fukui 910-0381 (JP)
(74) Representative: Grünecker, Kinkeldey, Stockmair & Schwanhäusser
(86) International application number: PCT/JP2010/068980
(87) International publication number: WO 2011/052595

(57) **Abstract**

The present invention provides a pressure-sensitive adhesive tape having a substrate and a pressure-sensitive adhesive layer formed from a water-dispersible pressure-sensitive adhesive on at least one surface of the substrate, which has a back face-holding force of 2.0 mm or less at 100°C.

## Description

### Technical Field

The present invention relates to a pressure-sensitive adhesive tape having a pressure-sensitive adhesive layer on at least one surface of a substrate. More particularly, the present invention relates to a pressure-sensitive adhesive tape preferable for a binding material for binding wires and the like.

### Background Art

Various pressure-sensitive adhesive tapes are used for binding wires, other members and the like in automobiles, OA equipments, home electric appliances and the like. Such pressure-sensitive adhesive tapes are often used for binding by hands, and therefore, constant application of sufficient pressure is difficult and hand-tearability is required. Here, the "hand-tearability" means the property of a pressure-sensitive adhesive tape to be torn when pulled to the left and right or back and forth with the edges in the width direction and longitudinal direction thereof held by hands, without use of scissors and the like.

Conventionally, pressure-sensitive adhesives of pressure-sensitive adhesive tapes for this use are mainly rubber or acrylic solvent-based pressure-sensitive adhesives, and volatile organic compounds (hereinafter sometimes to be abbreviated as "VOC") have been used as diluting solvents for the pressure-sensitive adhesive. However, efforts for consideration of the environment in recent years have produced a demand for a product free of VOC. Furthermore, the aforementioned conventional products have a problem that an end portion of pressure-sensitive adhesive tape is easily delaminated (edge delamination) under various environments after binding of the articles to be bound such as wires and the like, and improvement of such edge delamination is strongly desired. Examples of a pressure-sensitive adhesive tape using a water-dispersible pressure-sensitive adhesive in consideration of low-VOC include the pressure-sensitive adhesive tapes disclosed in patent documents 1 - 3 and the like.

### [Document List]

### [patent documents]

patent document 1: JP-A-2006-282733
patent document 2: JP-A-2006-8950
patent document 3: JP-A-2008-106262

### [SUMMARY OF THE INVENTION]

### Problems to be Solved by the Invention

The present invention has been made in view of the above-mentioned situation, and the problem thereof to be solved is to provide a pressure-sensitive adhesive tape which is low-VOC and can sufficiently suppress edge delamination after binding of wires and the like. In the following, the property to be able to sufficiently suppress edge delamination is sometimes referred to as "edge delamination resistance".
In addition, the problem is to provide a pressure-sensitive adhesive tape having superior hand-tearability in addition to the above-mentioned property.

### Means of Solving the Problems

For binding wires and the like with a pressure-sensitive adhesive tape, the pressure-sensitive adhesive tape is generally wound around the articles to be bound such as wires and the like, and the terminal end of the pressure-sensitive adhesive tape is adhered to the back face of the pressure-sensitive adhesive tape already wound (surface opposite to a pressure-sensitive adhesive layer-forming surface of a substrate). To suppress edge delamination of the pressure-sensitive adhesive tape after binding, therefore, it is necessary that the pressure-sensitive adhesive tape be adhered to the back face with high adhesive force, and have a back face-holding force that maintains the adhesive force stably. Thus, the present inventors have conducted intensive studies in an attempt to improve the back face-holding force of a pressure-sensitive adhesive tape, and found that a pressure-sensitive adhesive tape using a water-dispersible pressure-sensitive adhesive mainly made from an acrylic copolymer obtained by polymerizing a particular (meth)acrylic acid alkyl ester, a hydroxyl group-containing monomer and a carboxyl group-containing monomer at a particular composition shows a superior back face-holding force, and can maintain the superior back face-holding force even under environments with high temperature and high humidity, which resulted in the completion of the present invention.

Accordingly, the present invention provides the following.
[1] A pressure-sensitive adhesive tape comprising a substrate and a pressure-sensitive adhesive layer formed from a water-dispersible pressure-sensitive adhesive on at least one surface of the substrate, which has a back face-holding force of 2.0 mm or less at 100°C.
[2] The pressure-sensitive adhesive tape of the above-mentioned [1], wherein the water-dispersible pressure-sensitive adhesive comprises an acrylic water-dispersible pressure-sensitive adhesive comprised of, as a main component, a water-dispersible pressure-sensitive adhesive polymer comprised of an acrylic copolymer obtained by polymerizing a monomer mixture comprising (a) 60 - 95 parts by weight of a (meth)acrylic acid alkyl ester wherein the alkyl group has a carbon number of 4 - 12, (b) 4 - 15 parts by weight of a hydroxyl group-containing monomer and (c) 1 - 6 parts by weight of a carboxyl group-containing monomer, relative to 100 parts by weight of the total amount of the monomers.
[3] The pressure-sensitive adhesive tape of the above-mentioned [2], wherein the hydroxyl group-containing monomer is at least one kind selected from the group consisting of 2-hydroxyethyl methacrylate, 2-hydroxypropyl methacrylate and 4-hydroxybutyl methacrylate.
[4] The pressure-sensitive adhesive tape of the above-mentioned [2] or [3], wherein the carboxyl group-containing monomer is acrylic acid and/or methacrylic acid.
[5] The pressure-sensitive adhesive tape of any of the above-mentioned [1] - [4], wherein the water-dispersible pressure-sensitive adhesive comprises 15 - 60 parts by weight of a tackifier relative to 100 parts by weight of the water-dispersible pressure-sensitive adhesive polymer.
[6] The pressure-sensitive adhesive tape of the above-mentioned [5], wherein the tackifier is a rosin tackifier.
[7] The pressure-sensitive adhesive tape of the above-mentioned [5] or [6], wherein the tackifier has a softening point of 60 - 170°C.
[8] The pressure-sensitive adhesive tape of any of the above-mentioned [1] - [7], wherein a sol part of the water-dispersible pressure-sensitive adhesive polymer in the water-dispersible pressure-sensitive adhesive has a weight average molecular weight of 200,000 - 1,500,000.
[9] The pressure-sensitive adhesive tape of any of the above-mentioned [1] - [8], wherein the water-dispersible pressure-sensitive adhesive has a gel fraction of 20 - 50%.
[10] The pressure-sensitive adhesive tape of any of the above-mentioned [1] - [9], wherein the pressure-sensitive adhesive layer has a thickness of 20 - 100 µm.
[11] The pressure-sensitive adhesive tape of any of the above-mentioned [1] - [10], wherein the substrate shows hand-tearability.
[12] The pressure-sensitive adhesive tape of any of the above-mentioned [1] - [11], wherein the substrate is a fibrous substrate.
[13] The pressure-sensitive adhesive tape of the above-mentioned [12], wherein the fibrous substrate is a rayon/pulp non-woven fabric or an acetate woven fabric.
[14] The pressure-sensitive adhesive tape of any of the above-mentioned [1] - [13], which is a binding material.
[15] A bound product comprising articles to be bound and the pressure-sensitive adhesive tape of the above-mentioned [14] binding the articles.

### Effect of the Invention

Since the pressure-sensitive adhesive tape of the present invention uses a water-dispersible pressure-sensitive adhesive for a pressure-sensitive adhesive layer, it is free of the problem of adverse influence on the environment due to VOC. Furthermore, since it has a superior back face-holding force, when articles to be bound such as wires and the like are bound with the pressure-sensitive adhesive tape as a binding material, a bound product capable of maintaining a stable bound state free of edge delamination can be realized.

### Brief Description of the Drawings

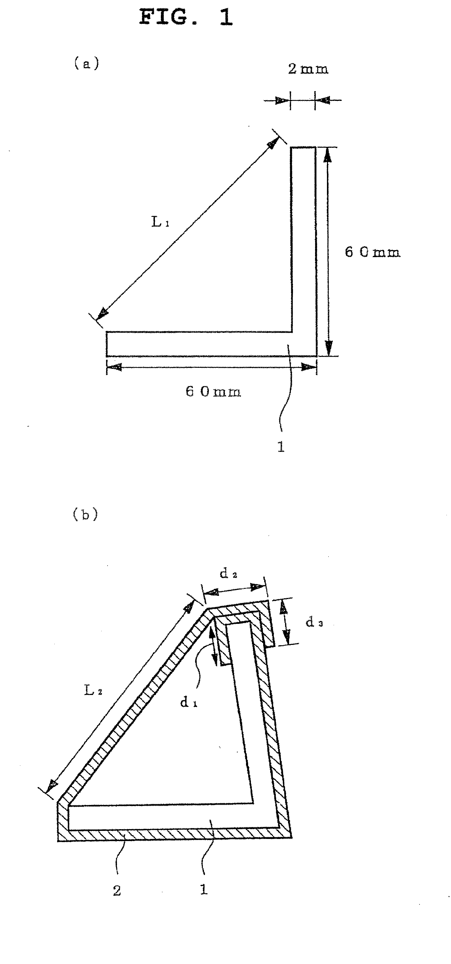

Fig. 1 is a schematic diagram of an edge delamination resistance test.

### [Description of Embodiments]

While a preferable embodiment of the present invention is shown in the following, detailed explanations and Examples are intended only for exemplification purposes and do not limit the scope of the present invention.

The pressure-sensitive adhesive tape of the present invention is a pressure-sensitive adhesive tape having a pressure-sensitive adhesive layer formed with a water-dispersible pressure-sensitive adhesive on at least one surface of a substrate, which is mainly characterized in that it has a back face-holding force at 100°C of 2.0 mm or less.

Here, the "back face-holding force at 100°C" refers to the value of "displacement distance" measured according to JIS Z0237 (2000), "Holding Force". To be precise, a stainless plate (thickness 2 mm) having a surface roughness (center line average roughness: 0.05 µm<Ra<0.40 µm, maximum height: Rₘₐₓ<3 µm defined in JIS B 0601) defined in JIS Z0237 (2000) "10.2.2 test plate" is prepared. A pressure-sensitive adhesive tape (width 19 mm, length 150 mm) is adhered to the aforementioned stainless plate. To the back face of the aforementioned pressure-sensitive adhesive tape is adhered one terminal portion of another pressure-sensitive adhesive tape (fulllength: 120 mm) by one reciprocation of a roller (weight 2 kg) at about 5 mm/s such that an area (width 19 mm, length 20 mm) thereof is adhered, and the other unadhered terminal portion is folded inwards such that the pressure-sensitive adhesive layer faces the pressure-sensitive adhesive layer. As the aforementioned roller, a roller defined in JIS Z0237 (2000), "10.2.4 press apparatus" is used. The adhered two pressure-sensitive adhesive tapes are stood at 100°C for 30 min. The folded terminal portion of the pressure-sensitive adhesive tape (terminal portion not adhered to the other pressure-sensitive adhesive tape) is loaded with a 300 g weight, and the tapes are maintained at 100°C for 1 hr. The displacement distance of the pressure-sensitive adhesive tape after the maintenance is measured. The test conditions and test method other than the above follow the JIS Z0237 (2000), "Holding Force".

When a pressure-sensitive adhesive tape is used as a binding material for binding articles to be bound such as wires and the like, a pressure-sensitive adhesive tape is wound around articles to be bound, and the terminal (end) of the pressure-sensitive adhesive tape is fixed by adhesion to the back face (surface opposite to a pressure-sensitive adhesive layer-forming surface of a substrate) of the pressure-sensitive adhesive tape already wound. To stably maintain such bound state, it is necessary that a stable adhesion state be maintained without time-course delamination and a large displacement of the terminal (end) of the pressure-sensitive adhesive tape adhered to the back face. The present invention is based on the finding that the back face-holding force of a pressure-sensitive adhesive tape at 100°C is closely related to edge delamination of a pressure-sensitive adhesive tape used as a binding material for binding articles to be bound such as wires and the like, and a pressure-sensitive adhesive tape showing the back face-holding force at 100°C of not more than 2.0 mm, preferably not more than 1.8mm, more preferably not more than 1.5 mm, particularly preferably not more than 0.5 mm can suppress edge delamination at a high level even when placed in an environment of high temperature, high humidity after binding articles to be bound such as wires and the like and can afford a bound product with high reliability.

The pressure-sensitive adhesive layer of the pressure-sensitive adhesive tape of the present invention can be formed from a water-dispersible pressure-sensitive adhesive. The water-dispersible pressure-sensitive adhesive is a pressure-sensitive adhesive in a dispersion liquid (emulsion) form, wherein a pressure-sensitive adhesive polymer is dispersed in an aqueous solvent free of an organic solvent. As such water-dispersible pressure-sensitive adhesive, various water-dispersible pressure-sensitive adhesives, wherein a water-dispersible pressure-sensitive adhesive polymer is an acrylic polymer, a natural rubber polymer, a synthetic rubber polymer and the like, can be used. Since durability of a pressure-sensitive adhesive is superior, an acrylic water-dispersible pressure-sensitive adhesive mainly made from an acrylic copolymer is preferable. When an acrylic water-dispersible pressure-sensitive adhesive and other water-dispersible pressure-sensitive adhesive are used in combination, other water-dispersible pressure-sensitive adhesive is preferably used within the range of not more than 40 parts by weight relative to 100 parts by weight of the acrylic water-dispersible pressure-sensitive adhesive. Here, not more than 40 parts by weight shows a weight ratio of a water-dispersible pressure-sensitive adhesive polymer in such other water-dispersible pressure-sensitive adhesive relative to 100 parts by weight of the water-dispersible pressure-sensitive adhesive polymer in the acrylic water-dispersible pressure-sensitive adhesive.

The acrylic water-dispersible pressure-sensitive adhesive to be used in the present invention is an acrylic water-dispersible pressure-sensitive adhesive comprising, as a main component, a water-dispersible pressure-sensitive adhesive polymer comprised of an acrylic copolymer obtained by polymerizing a monomer mixture comprising (a) a (meth)acrylic acid alkyl ester wherein the alkyl group has a carbon number of 4 - 12, (b) a hydroxyl group-containing monomer and (c) a carboxyl group-containing monomer, relative to 100 parts by weight of the total amount of the monomers. Here, the main component means that the aforementioned water-dispersible pressure-sensitive adhesive polymer is not less than 40 parts by mass relative to 100 parts by mass of a solid content of the acrylic water-dispersible pressure-sensitive adhesive. The aforementioned water-dispersible pressure-sensitive adhesive polymer is preferably not less than 60 parts by mass relative to 100 parts by mass of the solid content of the acrylic water-dispersible pressure-sensitive adhesive.

Specific examples of the (meth)acrylic acid alkyl ester wherein the alkyl group has a carbon number of 4 - 12 (component (a)) include n-butyl (meth)acrylate, isobutyl (meth)acrylate, sec-butyl (meth)acrylate, tert-butyl (meth)acrylate, pentyl (meth)acrylate, isopentyl (meth)acrylate, neopentyl (meth)acrylate, hexyl (meth) acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, lauryl (meth)acrylate and the like. Any one kind of these may be used alone, or two or more kinds thereof may be used in combination. Among these, one wherein the alkyl group has a carbon number of 4 - 9 is preferable, and particularly preferred are butyl acrylate, 2-ethylhexyl acrylate and isononyl acrylate.

The (meth)acrylic acid alkyl ester (component (a)) is generally used in a proportion of 60 parts by weight - 95 parts by weight, preferably 80 - 93 parts by weight, relative to 100 parts by weight of the total amount of the monomer mixture subjected to the polymerization. When it is less than 60 parts by weight, the resulting pressure-sensitive adhesive polymer applied to a pressure-sensitive adhesive layer cannot show good adhesiveness necessary as a pressure-sensitive adhesive tape.

Examples of the hydroxyl group-containing monomer (component (b)) include 2-hydroxyethyl (meth)acrylate, 2-hydroxypropyl (meth)acrylate, 4-hydroxybutyl (meth)acrylate, polyethylene glycol mona(meth)acrylate, polypropylene glycol mono(meth)acrylate, polytetramethylene glycol mono(meth)acrylate, polyethylene glycol polytetramethylene glycol mono(meth)acrylate, polypropylene glycol polytetramethylene glycol mono(meth)acrylate, 2-hydroxy-3-phenoxypropyl (meth)acrylate, 2-methacryloyloxyethyl 2-hydroxypropylphthalate, 2-methacryloyloxyethyl acid phosphate, glycerol di(meth)acrylate, 2-hydroxy-3-acryloyloxypropyl (meth)acrylate, 2-hydroxy-3-acryloyloxypropyl (meth)acrylate, fatty acid modified glycidyl (meth)acrylate, N,N,N-trimethyl-N-(2-hydroxy-3-methacryloyloxypropyl)ammonium chloride, polyethylene glycol mono(meth)acrylate, poly(ethylene glycolpropylene glycol) mono(meth)acrylate, poly(ethylene glycoltetramethyleneglycol) mono(meth)acrylate, propylene glycol polybutyleneglycol mono(meth)acrylate and the like. Any one kind of these may be used alone, or two or more kinds thereof may be used in combination. Among these, 2-hydroxyethyl (meth)acrylate, 2-hydroxypropyl (meth)acrylate, 4-hydroxybutyl (meth)acrylate and the like are preferable.

Such hydroxyl group-containing monomer (component (b)) is generally used in a proportion of 4 - 15 parts by weight, preferably 6 - 15 parts by weight, more preferably 6 - 12 parts by weight, relative to 100 parts by weight of the total amount of the monomer mixture subjected to the polymerization. When it is less than 4 parts by weight, the obtained pressure-sensitive adhesive polymer does not show good cohesion force, and adhesiveness of an adherend (that is, back face and members to be bound such as wires and the like)-adhesive interface decreases. When it exceeds 15 parts by weight, the viscosity of the obtained polymer increases, and the polymerized product is substantially difficult to use for a pressure-sensitive adhesive layer.

Examples of the carboxyl group-containing monomer (component (c)) include (meth)acrylic acid, itaconic acid, maleic anhydride, crotonic acid, maleic acid, fumaric acid, ω-carboxy-polycaprolactone mono(meth)acrylate, phthalic acid monohydroxymethyl (meth)acrylate, phthalic acid monohydroxyethyl (meth)acrylate, phthalic acid monohydroxypropyl (meth)acrylate, phthalic acid monohydroxybutyl (meth)acrylate, phthalic acid monohydroxypentyl (meth)acrylate, phthalic acid monohydroxyhexyl (meth)acrylate, phthalic acid monohydroxyheptyl (meth)acrylate, phthalic acid monohydroxyoctyl (meth)acrylate, phthalic acid monohydroxy 2-ethylhexyl (meth)acrylate, phthalic acid monohydroxynonyl (meth)acrylate, phthalic acid monohydroxydecyl (meth)acrylate, phthalic acid monohydroxyundecyl (meth)acrylate, phthalic acid monohydroxydodecyl (meth)acrylate, succinic acid monohydroxymethyl (meth)acrylate, succinic acid monohydroxyethyl (meth)acrylate, succinic acid monohydroxypropyl (meth)acrylate, succinic acid monohydroxybutyl (meth)acrylate, succinic acid monohydroxypentyl (meth)acrylate, succinic acid monohydroxyhexyl (meth)acrylate, succinic acid monohydroxyheptyl (meth)acrylate, succinic acid monohydroxyoctyl (meth)acrylate, succinic acid monohydroxy 2-ethylhexyl (meth)acrylate, succinic acid monohydroxynonyl (meth)acrylate, succinic acid monohydroxydecyl (meth)acrylate, succinic acid monohydroxyundecyl (meth)acrylate, succinic acid monohydroxydodecyl (meth)acrylate, acrylic acid dimer, acrylic acid trimer, hexahydrophthalic acid monohydroxymethyl (meth)acrylate, hexahydrophthalic acid monohydroxyethyl (meth)acrylate, hexahydrophthalic acid monohydroxypropyl (meth)acrylate, hexahydrophthalic acid monohydroxybutyl (meth)acrylate, hexahydrophthalic acid monohydroxypentyl (meth)acrylate, hexahydrophthalic acid monohydroxyhexyl (meth)acrylate, hexahydrophthalic acid monohydroxyheptyl (meth)acrylate, hexahydrophthalic acid monohydroxyoctyl (meth)acrylate, hexahydrophthalic acid monohydroxy 2-ethylhexyl (meth)acrylate, hexahydrophthalic acid monohydroxynonyl (meth)acrylate, hexahydrophthalic acid monohydroxydecyl (meth)acrylate, hexahydrophthalic acid monohydroxyundecyl (meth)acrylate, hexahydrophthalic acid monohydroxydodecyl (meth)acrylate and the like. Any one kind of these may be used alone, or two or more kinds thereof may be used in combination. Preferred are acrylic acid, methacrylic acid, itaconic acid, maleic anhydride, crotonic acid, maleic acid, fumaric acid and the like, and more preferred are acrylic acid and methacrylic acid.

Such carboxyl group-containing monomer (component (C)) is generally used in a proportion of 1 - 6 parts by weight, preferably 1 - 5 parts by weight, more preferably 1 - 4 parts by weight, relative to 100 parts by weight of the total amount of the monomer mixture subjected to the polymerization. When it is less than 1 part by weight, the obtained pressure-sensitive adhesive polymer does not show good cohesion force, and adhesiveness of an adherend (that is, back face and members to be bound such as wires and the like)-adhesive interface decreases. When it exceeds 6 parts by weight, the viscosity of the obtained polymer increases, and the polymerized product is substantially difficult to use for a pressure-sensitive adhesive layer.

Besides the above-mentioned essential monomers, other monomer copolymerizable therewith may be used in combination where necessary. Such other monomer can be used within the range of not more than 35 parts by weight relative to 100 parts by weight of the total amount of the monomer mixture subjected to the polymerization, and the amount to be used thereof can be appropriately determined according to the kind of each monomer. For development of good adhesiveness, the amount to be used is desirably determined such that the glass-transition point of the obtained polymer is generally not more than -20°C. Specific examples of such other monomer include functional monomers such as (meth)acrylic acid alkyl ester wherein the alkyl group has a carbon number of 1 - 3 (e.g., methyl (meth)acrylate, ethyl (meth)acrylate, isopropyl (meth)acrylate and the like), (meth)acrylic acid alkyl ester wherein the alkyl group has a carbon number of 13 - 18 (e.g., tridecyl methacrylate, stearyl (meth)acrylate and the like), glycidyl (meth)acrylate, methylglycidyl methacrylate, aminoethyl (meth)acrylate, 2-methacryloyloxyethyl isocyanate and the like, multifunctional monomers such as triethylene glycol diacrylate, ethylene glycol dimethacrylate, trimethylolpropane tri(meth)acrylate and the like, vinyl acetate, styrene, (meth)acrylonitrile, n-vinylpyrrolidone, (meth)acryloylmorpholine, cyclohexylmaleimide, isopropylmaleimide, (meth)acrylamide and the like. Any one kind of these may be used alone, or two or more kinds thereof may be used in combination.

In the present invention, the acrylic water-dispersible pressure-sensitive adhesive can be prepared as a dispersed liquid (emulsion) of acrylic copolymer by, for example, polymerizing a monomer mixture containing at least the aforementioned components (a) - (C) by conventional emulsion polymerization.

For emulsion polymerization, conventional methods such as a batch process, a monomer dropping method, a monomer emulsion dropping method and the like can be employed, where the polymerization temperature is, for example, about 20 - 100°C. A monomer emulsion dropping method is most preferable for achieving the object of the present invention. A batch process is associated with a problem of difficult control of the reaction temperature under high concentrations, thus causing viscosity increase. In addition, a monomer dropping method is associated with a problem of too small particle sizes, thus causing viscosity increase, and the like.

Examples of a polymerization initiator include, but are not limited to, azo polymerization initiators such as 2,2'-azobisisobutyronitrile, 2,2'-azobis(2-amidinopropane)dihydrochloride, 2,2'-azobis(N,N'-dimethyleneisobutylamidine)dihydrochloride, 2,2'-azobis[2-(5-methyl-2-imidazolin-2-yl)propane]dihydrochloride, 2,2'-azobis(2-methylpropionamidine)disulfate, 2,2-azobis[N-(2-carboxyethyl)-2-methylpropionamidine] and the like, peroxide polymerization initiators such as persulfates (e.g., potassium persulfate, ammonium persulfate and the like), benzoyl peroxide, t-butyl hydroperoxide and the like, and the like. The polymerization initiator may be a water-soluble or oil-soluble initiator. A polymerization initiator can be within the range of about 0.01 - 1 part by weight relative to 100 parts by weight of the total amount of the monomer mixture subjected to the polymerization.

In addition, a chain transfer agent may be used for the polymerization. Use of a chain transfer agent enables adjustment of the molecular weight of the obtained polymer. Examples of the chain transfer agent include conventionally-used chain transfer agents such as lauryl mercaptan, glycidyl mercaptan, mercaptoacetic acid, 2-mercaptoethanol, thioglycolic acid, 2-ethylhexyl thioglycolate, 2,3-dimercapto-1-propanol and the like. These may be used alone, or two or more kinds thereof may be used in combination. The amount of the chain transfer agent to be used is generally about 0.001 - 0.5 part by weight relative to 100 parts by weight of the total amount of the monomer mixture subjected to the polymerization.

The kind of an emulsifier is not particularly limited and a conventional emulsifier can be used. Examples of an anionic emulsifier include alkylsulfates such as sodium lauryl sulfate, ammonium lauryl sulfate, potassium lauryl sulfate and the like, polyoxyethylene alkyl ether sulfates such as polyoxyethylene lauryl ether sodium sulfate, polyoxyethylene lauryl phenyl ether sodium sulfate and the like, sulfonates such as sodium dodecylbenzene sulfonate and the like, sulfosuccinates such as disodium lauryl sulfosuccinate, polyoxyethylene disodium lauryl sulfosuccinate and the like, and the like. Additional examples include nonionic emulsifiers such as polyoxyethylene alkyl ether, polyoxyethylene alkyl phenyl ether and the like. Both anionic emulsifier and nonionic emulsifier permits a combined use of a radical polymerizable emulsifier having a propenyl group etc. introduced thereinto, and the like. The amount of the emulsifier to be used is preferably within the range of 0.5 - 5 parts by weight relative to 100 parts by weight of the total amount of the monomer mixture subjected to the polymerization. It is also possible to use a part of the emulsifier for the polymerization, and add the rest after polymerization.

In the present invention, the water-dispersible pressure-sensitive adhesive preferably has a gel fraction of 20 - 50%, more preferably 25 - 45%. A pressure-sensitive adhesive having a gel fraction of 20% or less shows good wettability to an adherend, but does not show sufficient cohesion force as a pressure-sensitive adhesive. When such pressure-sensitive adhesive is applied to the pressure-sensitive adhesive layer of a pressure-sensitive adhesive tape, the back face-holding force of the pressure-sensitive adhesive tape decreases, and sufficiently high edge delamination resistance cannot be achieved when used as a binding material of a bound product. In addition, a pressure-sensitive adhesive having a gel fraction exceeding 50% shows sufficient cohesion force, but unpreferably shows decreased adhesiveness.

The water-dispersible pressure-sensitive adhesive to be used in the present invention may contain a tackifier and the like as an optional component, as mentioned below. Therefore, when the water-dispersible pressure-sensitive adhesive contains an optional component, the gel fraction of the whole water-dispersible pressure-sensitive adhesive including the optional component is measured. The measurement method of the gel fraction is as described below. A pressure-sensitive adhesive (about 0.1 g, dry weight) applied onto a release liner to be mentioned below is dried and wrapped with a Teflon (registered trade mark) sheet (NTF1122: manufactured by Nitto Denko Corporation) having a diameter of 0.2 µm, and tied with a kite string. The pressure-sensitive adhesive wrappred with the Teflon sheet is placed in a 50 ml container filled with ethyl acetate, and left standing at room temperature for 1 week. Only one pressure-sensitive adhesive wrapped with Teflon is placed in one container mentioned above which is filled with ethyl acetate. Thereafter, the pressure-sensitive adhesive wrapped with the Teflon sheet is taken out from the aforementioned container, and dried with a dryer at 130°C for 2 hr to remove ethyl acetate. The sample weight before/after the operation is measured, and the gel fraction is calculated from the following formula.

Gel fraction (%)={(total weight of Teflon, kite string and gel part after drying)-(initial total weight of Teflon and kite string)}/{(initial total weight of Teflon, kite string and pressure-sensitive adhesive)-(initial total weight of Teflon and kite string)}x100

In the present invention, the sol part of the water-dispersible pressure-sensitive adhesive preferably has a weight-average molecular weight of 200,000 - 1,500,000. When the weight-average molecular weight is less than 200,000, cohesive failure easily occurs and the pressure-sensitive adhesive tape is easily delaminated from the back face. When it exceeds 1,500,000, the pressure-sensitive adhesive becomes hard and adhesion to an adherend becomes difficult. The sol part is preferably 300,000 - 1,300,000, more preferably 300,000 - 1,200,000. The "sol part of the water-dispersible pressure-sensitive adhesive" in the present invention refers to a sol part of a water-dispersible pressure-sensitive adhesive polymer.

A weight-average molecular weight of a sol part is measured based on polystyrene standard by a gel permeation chromatography (GPC) method, by preparing a solution of polymer (1 g/L) in tetrahydrofuran (hereinafter sometimes to be abbreviated as THF), passing through a 0.45 µm bore membrane filter, and using THF as eluent. The measurement apparatus and conditions are as follows.
apparatus: HLC-8120GPC manufactured by TOSOH, column: TSKgel GMH-H(S)x2, flow: 0.5 mL/min, detector: RI, column temperature 40°C.

To adjust the gel fraction of the water-dispersible pressure-sensitive adhesive, for example, a crosslinking agent can be added to a water-dispersible pressure-sensitive adhesive. Such crosslinking agent is not particularly limited, and known crosslinking agents can be used. Examples of a water-soluble crosslinking agent include epoxide-based crosslinking agents such as polyethylene glycol diglycidyl ether and the like, water dispersible isocyanate-based crosslinking agents, oxazoline-based crosslinking agents, aziridine-based crosslinking agents, hydrophilized carbodiimide-based crosslinking agents, active methylol, active alkoxymethyl, metal chelate and the like. Examples of an oil-soluble crosslinking agent include multifunctional melamine compounds such as methylated methylol melamine, butylated hexamethylol melamine and the like, multifunctional epoxy compounds such as N,N,N',N'-tetraglycidyl m-xylenediamine, diglycidyl aniline, glycerol diglycidyl ether and the like, multifunctional isocyanate compounds such as tolylene diisocyanate, hexamethylene diisocyanate, polymethylene polyphenylisocyanate, diphenylmethane diisocyanate, trimethylolpropane tolylene diisocyanate, polyether polyisocyanate, polyester polyisocyanate and the like, oil-soluble carbodiimide-based crosslinking agents and the like. Of these, one kind can be used alone, or two or more kinds thereof can be used in combination.

The amount of the crosslinking agent to be used is generally 0.001 - 10 parts by weight, preferably 0.001 - 5 parts by weight, relative to 100 parts by weight of the water-dispersible pressure-sensitive adhesive polymer in the water-dispersible pressure-sensitive adhesive. In emulsion polymerization, gel due to polymerization sometimes exists already at the stage of polymerization completion. In this case, a crosslinking agent is not entirely necessary.

In the present invention, a tackifier can be added to the water-dispersible pressure-sensitive adhesive to improve adhesiveness of a pressure-sensitive adhesive tape to an adherend and back face adhesive force thereof. The tackifier is not particularly limited and known tackifiers can be used. Examples thereof include rosin ester tackifier, hydrogenated rosin tackifier, polymerized rosin tackifier, terpene tackifier, coumaroneinden tackifier, alicyclic saturated hydrocarbon tackifier, C5 tackifier, C9 tackifier, C5/C9 tackifier and the like, and preferred is rosin tackifier, and more preferred is special rosin ester. One kind alone of these tackifiers can be used, or two or more kinds thereof can be used in combination.

When a tackifier is used, the amount thereof to be added is preferably 15 - 60 parts by weight, more preferably 20 - 55 parts by weight, further preferably 30 - 45 parts by weight, relative to 100 parts by weight of the water-dispersible pressure-sensitive adhesive polymer in the water-dispersible pressure-sensitive adhesive. When it is 15 parts by weight or less, the effect of improving necessary adhesiveness may not be obtained sufficiently. When it exceeds 60 parts by weight, the cohesion force of a pressure-sensitive adhesive tends to be insufficient.

The softening point of the tackifier is preferably 60 - 170°C. When the softening point is lower than 60°C, the tape tends to be dislocated easily since the cohesion force is insufficient, and when it is higher than 170°C, the tape shows inferior adhesiveness to the back face, both of which are not preferable. Such tackifiers may be added in any form, and addition in a water-dispersion form is preferable.

The "softening point of tackifier" refers to the values measured according to the softening point test method (ring-and-ball method) defined in JIS K 5902 (2006). To be specific, a sample is rapidly melted at a lowest possible temperature and carefully poured to fill a ring placed on a flat metal plate without making foams. When the sample is cooled to room temperature, the part of the sample rising from the flat plane including the upper end of the ring is removed with a knife heated a little. Then, a support (ring board) is placed in a glass container (heating bath) with a diameter of not less than 85 mm and a height of not less than 127 mm, and water is poured into the glass container to not less than 90 mm from the bottom. A steel ball (diameter 9.5 mm, mass 3.5 g) and the ring filled with the sample are immersed in water such that they do not contact with each other, and the temperature of water is maintained at 20°C±5°C for 15 min. The steel ball is placed at the center of the surface of the sample in the ring, and this is placed at a fixed position on the aforementioned support. The distance from the upper end of the ring to the water surface is maintained at 50 mm, and a thermometer is placed. In this case, the position of the center of the mercury ball in the thermometer is set to be the same as the center of the ring. The container is then heated. The flame of a bunsen burner to be used for the heating is made to hit the middle between the center and the edge of the bottom of the glass container to achieve uniform heating. After reaching 40°C from the start of the heating, the bath temperature is set to rise at 5.0±0.5°C per min. The sample is gradually softened, and falls from the ring. The temperature at which the sample finally touches the bottom plate is measured (softening point). Such measurement is performed twice or more, and an average value thereof is taken as the softening point of a tackifier. When the softening point of a tackifier is not less than 100°C, water is changed to glycerol and a measurement is performed in the same manner as above to obtain a softening point.

The water-dispersible pressure-sensitive adhesive can contain various additives, for example, release modifier, plasticizer, softening agent, filler, pigment, dye, anti-aging agent and the like as necessary.

As mentioned below, the pressure-sensitive adhesive layer of a pressure-sensitive adhesive tape is formed by directly applying a water-dispersible pressure-sensitive adhesive onto one surface of a substrate, and drying by heating, or applying a water-dispersible pressure-sensitive adhesive onto a separator, drying by heating, and transferring onto one surface of a substrate, wherein the thickness (thickness after drying) thereof is preferably 20 - 100 µm. When it is thinner than 20 µm, a good back face adhesive force cannot be obtained, and when it is thicker than 100 µm, the tape is easily dislocated due to the shear force. Both cases are not preferable in terms of edge delamination resistance when the pressure-sensitive adhesive tape is used as a binding material to bind articles to be bound to give a bound product. Moreover, when it is thicker than 100 µm, the unwinding force becomes heavy, and binding workability when the pressure-sensitive adhesive tape is used as a binding material to bind articles to be bound to give a bound product becomes poor. The width of a pressure-sensitive adhesive tape is preferably 5 mm - 30 mm to maintain a stable binding state.

As a substrate of a pressure-sensitive adhesive tape, a plastic film or sheet made from polyolefin, vinyl chloride, acrylic resin etc., a fibrous substrate and the like can be mentioned. Of these, a fibrous substrate is preferable from the aspect of heat resistance. As a fibrous substrate, a fibrous substrate made of various fibers such as inorganic fibers (e.g., glass, polyester, nylon, acetate, rayon, cotton, hemp, pulp, wool, silk and the like), natural fiber, regenerated fiber, semisynthetic fiber, synthetic fiber and the like can be used, which may be made of a single fiber or a blended fiber. In addition, the form of a fibrous substrate may be any of woven fabric (fabric), knit, non-woven fabric, plastic, fiber complex and the like. In view of hand-tearability, stretch and the like, a woven fabric (fabric) or a non-woven fabric is preferable. The basis weight of a fibrous substrate is preferably about 80 - 120 g/m². To achieve suitable strength and hand-tearability, a particularly preferable fibrous substrate is a rayon/pulp non-woven fabric or an acetate woven fabric. The "rayon/pulp non-woven fabric" is a non-woven fabric made from a blend of rayon and pulp. In the present invention, the blending ratio of respective fibers in the rayon/pulp non-woven fabric is not particularly limited. The rayon/pulp blending ratio (weight ratio) is preferably 80 - 40/20 - 60, more preferably 60 - 50/40 - 50. In addition, the rayon/pulp non-woven fabric is preferably produced by a span lace method.

To improve adhesion between such substrates and a pressure-sensitive adhesive, an impregnant and/or a priming agent can also be impregnated/applied. Examples of such impregnant and primer include urethane resin, polyester resin, acrylic resin, polyamide resin, melamine resin, olefin resin, polystyrene resin, epoxy resin, phenol resin, isocyanurate resin, polyvinyl acetate resin, natural rubber, isoprene rubber, butadiene rubber, polyisobutylene rubber and the like.

The pressure-sensitive adhesive tape of the present invention can be, for example, produced as follows. While the production method of a pressure-sensitive adhesive tape is not particularly limited, the tape can be produced according to a conventional production method of a pressure-sensitive adhesive tape, by applying, as necessary, the above-mentioned primer coating treatment of a substrate, a back size treatment and(or) a back face treatment, directly applying a water-dispersible pressure-sensitive adhesive to one surface of the substrate, and drying same at 120 - 150°C for 2 - 5 min, or applying a water-dispersible pressure-sensitive adhesive on a separator and, after drying at 120 - 150°C for 2 - 5 min, transferring same to the above-mentioned substrate.

The above-mentioned method preferably further includes, for example, ageing. The ageing can be performed by, for example, heating and preserving at 40 - 60°C for 12 - 60 hr.

To protect the adhesive face of the pressure-sensitive adhesive layer until use of the pressure-sensitive adhesive tape of the present invention, a release liner can be laminated on the adhesive face. The release liner is not particularly limited as long as it undergoes a release treatment and ensures sufficiently light release force. For example, a film of polyester, polyvinyl chloride, polyvinylidene chloride, poly(ethylene terephthalate) and the like, paper such as quality paper, glassine and the like, or a laminate film of quality paper or glassine etc. and polyolefin, and the like, which underwent a release treatment by applying a silicone resin, fluorine resin and the like to the surface to be in contact with the pressure-sensitive adhesive layer, is used. The thickness of the release liner is generally 80 - 120 µm, preferably 100 - 110 µm. The pressure-sensitive adhesive tape of the present invention can be used by peeling off a release liner immediately before use, and adhering the exposed adhesive face to an article to be bound.

The pressure-sensitive adhesive tape of the present invention preferably has a substrate having a rough surface, which is a back face, for example, a fibrous substrate as a substrate of the pressure-sensitive adhesive tape of the present invention, since a better back face-holding force can be obtained.

The pressure-sensitive adhesive tape of the present invention is particularly suitable for a binding material for binding articles to be bound. Examples of the articles to be bound with the pressure-sensitive adhesive tape of the present invention (binding material) include wires in automobiles, OA equipments, home electric appliances and the like (i.e., insulated electrical conductor obtained by insulation coating the outer circumference of a conductor wire with polyvinyl chloride, polyolefin etc.), airbag and the like. Binding such articles to be bound with the pressure-sensitive adhesive tape of the present invention (binding material), a highly reliable bound product capable of maintaining a stable bound state free of edge delamination can be realized.

### Examples

The present invention is explained in more detail in the following by referring to Examples. However, the examples do not limit the present invention. The part described below means parts by weight.

Water (50 parts) is charged in a reaction vessel equipped with a thermometer, a stirrer, a nitrogen inlet tube and a refluxing condenser tube, and nitrogen gas replacement was performed with stirring at room temperature (25°C) for 1.5 hr. Thereto was added 2,2-azobis[N-(2-carboxyethyl)-2-methylpropionamidine] (0.1 part) and the temperature was set to 60°C. An emulsion of 2-ethylhexyl acrylate, 2-hydroxyethyl methacrylate, acrylic acid, in the given amounts shown in Table 1, and sodium lauryl sulfate (2 parts) in water (40 parts) was added dropwise over 3 hr to allow polymerization. After aging at the same temperature for 2 hr, the mixture was cooled to room temperature, and neutralized with 10% aqueous ammonia to give various polymers.

To such various polymers (100 parts of solid part) was added a rosin tackifier (trade name "SUPER ESTER NS-100H" manufactured by Arakawa Chemical Industries, Ltd., softening point 100°C) (40 parts), and the mixture was applied to one surface of a fabric (woven fabric) (basis weight about 100 g/m²) as a substrate made from an acetate fiber such that the thickness of pressure-sensitive adhesive layer after drying was 40 µm, dried at 130°C for 3 min and wound up. Ageing at 50°C for 24 hr gave the patch tapes of Examples 1 - 3 and Comparative Examples 1 and 2. In Comparative Examples 3 and 4, since the viscosity increased during polymerization to prevent stirring, a pressure-sensitive adhesive tape could not be produced. Using a pressure-sensitive adhesive similar to those mentioned above, a pressure-sensitive adhesive is applied to one surface of a non-woven fabric (weight about 50 g/m²) as a substrate made from rayon/pulp (blending ratio 50:50) such that the thickness of a pressure-sensitive adhesive layer after drying was 80 µm, dried at 105°C for 3 min and wound up to give the patch tape of Example 4.

### (Experimental Example)

The pressure-sensitive adhesive tapes obtained in Examples 1 - 4 and Comparative Examples 1, 2 were evaluated for the back face-holding force and edge delamination resistance by the following methods. The results are shown in Table 1. In Comparative Examples 3 and 4, a back face-holding force test and an edge delamination resistance test were not performed, since a pressure-sensitive adhesive tape could not be produced.

### (1) Back face-holding force

A back face-holding force (displacement distance) at 100°C was measured by the aforementioned method. As for those that were detached within 1 hr, the time before coming off was measured.
The back face-holding force thus measured needs to show a displacement distance of 2.0 mm or below. When the displacement distance is higher than 2.0 mm, the practical edge delamination resistance is unpreferably inferior.

### (2) Edge delamination resistance

A schematic diagram of an edge delamination resistance test is shown in Fig. 1. A molded product wherein a polypropylene plate (thickness 2 mm, length 120 mm, width 60 mm) is folded 90° at the longitudinal middle position (at 60 mm) (L-shape) is prepared (Fig. 1 (a)). A pressure-sensitive adhesive tape cut in 19 mm is adhered to the middle outer side in the horizontal direction of the molded product, by one reciprocation of a 2 kg roller. In this case, one end of the pressure-sensitive adhesive tape is folded back on the inner side of the polypropylene plate by distance d₁ (about 5 mm). To apply a load on the tape end when the same pressure-sensitive adhesive tape is adhered, the molded product is bent toward the inner direction (such that distance L₁ (85 mm) between molded product terminal portions becomes L₂ (70 mm)), and the tape is adhered to the back face such that the total of the adhesion distances d₂ and d₃ is 20 mm±2 mm (Fig. 1 (b)). The prepared sample was stood at room temperature for 12 hr, placed under humidification (50°C, 92%RH), and the distance of delamination of the pressure-sensitive adhesive tape back face was measured 7 days later to give the results of the edge delamination resistance test. As for those that were detached before lapse of 7 days, the time before coming off was measured. As the evaluation criteria, when the delamination distance at 7 days later is higher than 10 mm, the practical edge delamination resistance is unpreferably inferior. Accordingly, a delamination distance of not more than 10 mm is a pass (O and a delamination distance more than 10 mm or delamination within 7 days is a failure (x).

From Table 1, the results of the back face-holding force test of Examples 1 to 4 of not more than 2 mm mean that their back face-holding force is fine. In Comparative Examples 1 and 2, the tapes fell off in 15 min and 2 min, respectively, and the back face-holding force was poor. As for the results of the edge delamination resistance test, Examples 1 to 4 showed 1 mm, 2 mm, 1 mm, 1 mm, respectively, and the evaluation was a pass (O) However, in Comparative Examples 1 and 2, the tapes fell off in 6 hr and 1 hr, and the evaluation was a failure (x). From the above results, Examples 1 - 4 are superior in the back face-holding force and edge delamination resistance as compared to Comparative Examples 1 and 2.

**Table 1**

| | | Example | | | | Comparative Example | | | |
|---|---|---|---|---|---|---|---|---|---|
| | | 1 | 2 | 3 | 4 | 1 | 2 | 3 | 4 |
| 2-ethylhexyl acrylate (part) | | 89 | 92 | 88 | 89 | 97 | 95.8 | 83 | 89 |
| 2-hydroxyethyl methacrylate (part) | | 8 | 7 | 7 | 8 | 0 | 4 | 16 | 4 |
| acrylic acid (part) | | 3 | 1 | 5 | 3 | 3 | 0.2 | 1 | 7 |
| weight average molecular weight of sol part | | 510,000 | 650,000 | 450,000 | 510,000 | 500,000 | 700,000 | | |
| gel fraction of pressure-sensitive adhesive (%) | | 38 | 21 | 38 | 38 | 39 | 11 | evaluation not possible | evaluation not possible |
| back face-holding force (mm) | | 0.1 | 1.5 | 0.3 | 0.1 | - | - | | |
| edge delamination resistance | numerical value (mm) | 1 | 2 | 1 | 1 | - | - | | |
| | evaluation | ○ | ○ | ○ | ○ | × | × | | |

### Industrial Applicability

The pressure-sensitive adhesive tape of the present invention is particularly superior in the back face-holding force and hand-tearability, shows reduction of VOC and improved edge delamination from a product, and can be used for a bound product with the pressure-sensitive adhesive tape.

This application is based on a patent application No. 2009-248995 filed in Japan, the contents of which are incorporated in full herein.

### [Explanation of Symbols]

- 1: polypropylene plate
- 2: pressure-sensitive adhesive tape

## Claims

1. A pressure-sensitive adhesive tape comprising a substrate and a pressure-sensitive adhesive layer formed from a water-dispersible pressure-sensitive adhesive on at least one surface of the substrate, which has a back face-holding force of 2.0 mm or less at 100°C.

2. The pressure-sensitive adhesive tape according to claim 1, wherein the water-dispersible pressure-sensitive adhesive comprises an acrylic water-dispersible pressure-sensitive adhesive comprised of, as a main component, a water-dispersible pressure-sensitive adhesive polymer comprised of an acrylic copolymer obtained by polymerizing a monomer mixture comprising (a) 60 - 95 parts by weight of a (meth)acrylic acid alkyl ester wherein the alkyl group has a carbon number of 4 - 12, (b) 4 - 15 parts by weight of a hydroxyl group-containing monomer and (c) 1 - 6 parts by weight of a carboxyl group-containing monomer, relative to 100 parts by weight of the total amount of the monomers.

3. The pressure-sensitive adhesive tape according to claim 2, wherein the hydroxyl group-containing monomer is at least one kind selected from the group consisting of 2-hydroxyethyl methacrylate, 2-hydroxypropyl methacrylate and 4-hydroxybutyl methacrylate.

4. The pressure-sensitive adhesive tape according to claim 2 or 3, wherein the carboxyl group-containing monomer is acrylic acid and/or methacrylic acid.

5. The pressure-sensitive adhesive tape according to any one of claims 1 to 4, wherein the water-dispersible pressure-sensitive adhesive comprises 15 - 60 parts by weight of a tackifier relative to 100 parts by weight of the water-dispersible pressure-sensitive adhesive polymer.

6. The pressure-sensitive adhesive tape according to claim 5, wherein the tackifier is a rosin tackifier.

7. The pressure-sensitive adhesive tape according to claim 5 or 6, wherein the tackifier has a softening point of 60 - 170°C.

8. The pressure-sensitive adhesive tape according to any one of claims 1 to 7, wherein a sol part of the water-dispersible pressure-sensitive adhesive polymer in the water-dispersible pressure-sensitive adhesive has a weight average molecular weight of 200,000 - 1,500,000.

9. The pressure-sensitive adhesive tape according to any one of claims 1 to 8, wherein the water-dispersible pressure-sensitive adhesive has a gel fraction of 20 - 50%.

10. The pressure-sensitive adhesive tape according to any one of claims 1 to 9, wherein the pressure-sensitive adhesive layer has a thickness of 20 - 100 µm.

11. The pressure-sensitive adhesive tape according to any one of claims 1 to 10, wherein the substrate shows hand-tearability.

12. The pressure-sensitive adhesive tape according to any one of claims 1 to 11, wherein the substrate is a fibrous substrate.

13. The pressure-sensitive adhesive tape according to claim 12, wherein the fibrous substrate is a rayon/pulp non-woven fabric or an acetate woven fabric.

14. The pressure-sensitive adhesive tape according to any one of claims 1 to 13, which is a binding material.

15. A bound product comprising articles to be bound and the pressure-sensitive adhesive tape according to claim 14 binding the articles.
